# EUROPÄISCHE PATENTSCHRIFT

(11) **EP 3 564 332 B1**
(45) Veröffentlichungstag und Bekanntmachung des Hinweises auf die Patenterteilung: **24.03.2021**
(21) Anmeldenummer: 19167726.9
(22) Anmeldetag: 08.04.2019
(51) Int. Cl.: C09J 7/38, B60C 19/00, B60C 19/12

(54) **FAHRZEUGLUFTREIFEN MIT GERÄUSCHABSORBIERENDEN EIGENSCHAFTEN UND KLEBEMITTELZUSAMMENSETZUNG ZUR BEFESTIGUNG WENIGSTENS EINES GERÄUSCHABSORBERS AUF EINER FLÄCHE EINES FAHRZEUGLUFTREIFENS**
PNEUMATIC VEHICLE TYRE WITH SOUND-ABSORBING PROPERTIES AND ADHESIVE COMPOSITION FOR FIXING AT LEAST ONE SOUND ABSORBER ON A SURFACE OF A VEHICLE TYRE
PNEUMATIQUES DE VÉHICULE PRÉSENTANT DES PROPRIÉTÉS D'ABSORPTION DE BRUIT ET COMPOSITION D'AGENT ADHÉSIF PERMETTANT DE FIXER AU MOINS UN ABSORBEUR DE BRUIT SUR UNE SURFACE D'UN PNEUMATIQUE DE VÉHICULE

(30) Priorität: 03.05.2018 DE 102018206781
(43) Veröffentlichungstag der Anmeldung: 06.11.2019
(73) Patentinhaber: Continental Reifen Deutschland GmbH, 30165 Hannover (DE)
(72) Erfinder: TIM KEE, Sherry-Ann, 30165 Hannover (DE); GUARDALABENE, Joe, 30165 Hannover (DE); DOROSHENKO, Mikheil, 30165 Hannover (DE)
(74) Vertreter: Continental Corporation

(56) Entgegenhaltungen:
- EP-A1- 2 199 115
- EP-A1- 3 199 382
- EP-A1- 3 308 984

## Beschreibung

Die Erfindung betrifft einen Fahrzeugluftreifen mit geräuschabsorbierenden Eigenschaften und eine Klebemittelzusammensetzung zur Befestigung wenigstens eines Geräuschabsorbers auf einer Fläche eines Fahrzeugluftreifens.

Ein Fahrzeugluftreifen umfassend einen Geräuschabsorber in Form eines Schaumstoffrings an der Reifeninnenfläche ist aus der DE 10 2007 028932 A1 und der WO 2015149959 A1 bekannt. Der Geräuschabsorber reduziert die Luftschwingung im Reifen und führt zu einer Verbesserung des Geräuschverhaltens im Fahrzeug. Der Schaumstoffring besteht aus offenzelligem Schaumstoff und wird auch als "Innenabsorber" bezeichnet. Der Geräuschabsorber ist gemäß der Offenbarung der DE 10 2007 028932 A1 mittels eines klebrigen Dichtmittels an die Reifeninnenfläche angebracht Die EP 3308984 A1 offenbart einen Fahrzeugluftreifen mit geräuschabsorbierenden Eigenschaften, wobei ein Geräuschabsorber mittels einer Dichtmittelzusammensetzung auf einer Flache eines Fahrzeugluftreifens haftend angebracht ist. Die Zusammensetzung enthält Ruß als Füllstoff.

Der vorliegenden Erfindung liegt die Aufgabe zugrunde, einen Fahrzeugluftreifen bereitzustellen, der eine verbesserte Geräuschabsorption aufweist und/oder sich auf vergleichsweise einfache und kostengünstige Weise herstellen lässt.

Gelöst wird diese Aufgabe dadurch, dass der Fahrzeugluftreifen in seinem Inneren an wenigstens einer Innenfläche zumindest teilweise wenigstens ein anhaftendes Klebemittel aufweist, welches wenigstens folgende Bestandteile enthält:
- 10 bis 80 Gew.-% wenigstens eines Kautschuks, und
- 11 bis 80 Gew.-% wenigstens eines Polyolefins, und
- 2 bis 20 Gew.-% wenigstens eines Kohlenwasserstoffharzes, und
- 1 bis 30 Gew.-% wenigstens eines Füllstoffs mit einer Dichte von 2,5 bis 12 g/cm³.

Dadurch, dass das Klebemittel die genannten Substanzen in den genannten Mengen, insbesondere 1 bis 30 Gew.-% wenigstens eines Füllstoffs mit einer vergleichsweise hohen Dichte von 2,5 bis 12 g/cm³, enthält, weist es selbst in erhöhtem Maße (im Vergleich zu klebrigen Dichtmittel-Zusammensetzungen auf der Reifeninnenseite aus dem Stand der Technik) geräuschabsorbierende Eigenschaften auf.
Zudem ist es vergleichsweise einfach zusammengesetzt, kompatibel mit den anderen Reifenbauteilen und weist insbesondere eine optimierte Viskosität und damit ein optimiertes Fließverhalten bei einer gleichzeitig sehr guten Klebrigkeit auf. Somit haftet es an der Reifeninnenseite und zwar insbesondere auch im Fahrbetrieb des Reifens.

Mit "Viskosität" ist im Rahmen der vorliegenden Erfindung insbesondere die komplexe Viskosität (z. B. mittels Platte-Platte-Rheometer bei einer jeweiligen Temperatur von Interesse) gemeint, sofern nichts anderes angegeben ist. Im Rahmen der vorliegenden Erfindung ist eine komplexe Viskosität bei vergleichsweise hoher Temperatur relevant, wie insbesondere bei 120 °C.

Unter der Formulierung "zumindest teilweise" ist zu verstehen, dass erfindungsgemäß nicht die gesamte Innenfläche das Klebemittel aufweisen muss. Eine nicht flächendeckende Ausführungsform kann sich beispielsweise durch streifenweise Auftragen von Klebemittel ergeben.
Gemäß einer vorteilhaften Ausführungsform der Erfindung weist der Fahrzeugluftreifen wenigstens an der dem Laufstreifen gegenüberliegenden Innenfläche wenigstens ein Klebemittel auf. Auch hier kann das Klebemittel lückenhaft und/oder in Form von Streifen aufgebracht sein.

Gemäß einer weiteren vorteilhaften Ausführungsform der Erfindung ist wenigstens die der dem Laufstreifen gegenüberliegenden Innenfläche vollständig oder nahezu vollständig mit wenigstens einem Klebemittel versehen.

Gemäß einer vorteilhaften Ausführungsform der Erfindung weist der Fahrzeugluftreifen wenigstens einen an dem Klebemittel haftend angebrachten Geräuschabsorber auf. Durch die optimale Klebrigkeit des Klebemittels ist die Haftung des wenigstens einen Geräuschabsorbers in dem erfindungsgemäßen Fahrzeugluftreifen über die Lebensdauer des Reifens sichergestellt.
Der Fahrzeugluftreifen gemäß dieser Ausführungsform weist gegenüber Fahrzeugluftreifen aus dem Stand der Technik umfassend Geräuschabsorber eine verbesserte Geräuschabsorption auf, da nunmehr der angebrachte Geräuschabsorber und der Füllstoff des Klebemittels beide zusammen zur Geräuschabsorption beitragen.
Hierbei beträgt die Schichtdicke des Klebemittels in radialer Richtung bevorzugt 0,5 bis 3 mm bevorzugt 0,5 bis 2 mm, besonders bevorzugt 1 bis 1,5 mm.

Gemäß einer weiteren vorteilhaften Ausführungsform der Erfindung beträgt die Schichtdicke des Klebemittels in radialer Richtung zumindest teilweise 2 bis 20 mm, bevorzugt 3,5 bis 20 mm, besonders bevorzugt 3,5 bis 10 mm.
Bevorzugt weist der erfindungsgemäße Fahrzeugluftreifen in dieser Ausführungsform zumindest in den Bereichen, in denen das Klebemittel eine Schichtdicke von 2 bis 20 mm, insbesondere 3,5 bis 20 mm, aufweist, keinen zusätzlich angebrachten Geräuschabsorber auf.
Der erfindungsgemäße Fahrzeugluftreifen ist in dieser Ausführungsform der Erfindung vergleichsweise einfach und kostengünstig hergestellt.

Bei der Fläche des Fahrzeugluftreifens für die das Klebemittel geeignet ist, kann es sich wie oben beschrieben, prinzipiell um jede Fläche handeln.
In der Ausführungsform, in der ein auf dem Klebemittel haftend angebrachter Geräuschabsorber vorgesehen ist, ist die Fläche zweckmäßig so zu wählen, dass ein Geräuschabsorber für die Nutzung über einen längeren Zeitraum, insbesondere für eine lange Haltbarkeit im Fahrbetrieb und der Lebensdauer des Reifens, angebracht werden kann.
Zweckmäßig ist es, den wenigstens einen Geräuschabsorber im Inneren des Reifens anzubringen, und zwar wie eingangs beschrieben auf der dem Laufstreifen gegenüberliegenden Innenfläche. Die Fläche kann dabei jede denkbare Größe haben und richtet sich nach der Geometrie und den Maßen des Geräuschabsorbers.

Bei dem Geräuschabsorber kann es sich prinzipiell um jedes Element oder jede Kombination von Elementen handeln, welches bzw. welche in einem Fahrzeugluftreifen auf seiner Innenfläche durch Haftung angebracht werden kann/können und welches/welche die Geräuschemission des Reifens im Fahrbetrieb reduziert/reduzieren.
Gemäß einer bevorzugten Ausführungsform ist der wenigstens eine Geräuschabsorber wenigstens ein poröses Dämpfungselement. Poröse Materialien weisen insbesondere den Vorteil auf, dass sie neben der Geräuschabsorption zugleich ein nicht zu hohes Eigengewicht in den Reifen einbringen, sodass die Rollwiderstandseigenschaften des Reifens nicht unnötig verschlechtert werden.
Das poröse Material, aus dem das Dämpfungselement ausgebildet ist, ist beispielsweise ausgewählt aus der Gruppe enthaltend Polyurethan, insbesondere Polyurethanschäume auf einer Polyetherbasis und/oder Polyurethanschäume auf einer Polyesterbasis mit einer Dichte von 18 bis 300 kg/m³, bevorzugt 30 bis 35 kg/m³, und einer Härte von 6,5 kilo-pascal, Polyester mit einer Dichte von 18 bis 300 kg/m³ bevorzugt 30 bis 35 kg/m³, und einer Härte von 6,5 kilo-pascal, Polyether, sowie beliebige poröse, schallabsorbierende Materialienmischungen, wie beispielsweise Glas- oder Steinwolle, Schlingenware oder Hochflor oder Vliesmaterialien oder Kork. Weitere mögliche poröse Materialien, die sich für die Nutzung als Dämpfungselement eignen, sind beispielsweise ein Melaminharzschaum oder ein Bauschaum.

Besonders bevorzugt enthält der Geräuschabsorber, bevorzugt wenigstens ein poröses Dämpfungselement, wenigstens ein Polyurethan. Polyurethan ist aufgrund seiner spezifischen Dichte und sonstigen Materialbeschaffenheit sowie Verfügbarkeit besonders geeignet.

Gemäß einer besonders vorteilhaften Ausführungsform ist das poröse Dämpfungselement ein in Umlaufrichtung geschlossener oder geöffneter schallabsorbierender Schaumstoffring. Dieser sorgt für eine gleichmäßige Schallabsorption und der Reifen behält seine Gleichförmigkeit. Der Ring kann dabei in Umlaufrichtung geschlossen sein oder in geöffneter Form als Streifen vorliegen, wobei sich die Enden des Streifens berühren können aber nicht müssen oder aber auch überlappen können.
Der Schaumstoff des Schaumstoffringes ist bevorzugt ein offenzelliger Schaumstoff, da dieser am besten dazu geeignet ist, Schall zu absorbieren.

Besonderes bevorzugt ist der Geräuschabsorber ein geschlossener schallabsorbierender Schaumstoffring aus Polyurethan, dabei besonders bevorzugt ein Polyurethanschaum auf Polyetherbasis.
Derartige Schäume sind dem Fachmann bekannt.

Darüber hinaus kann der Geräuschabsorber bzw. die Geräuschabsorber eine beliebige Form aufweisen, wie. z.B. einzelne Elemente in Form von Blöcken, Streifen oder ähnlichem, die beliebig miteinander kombiniert werden können.

Ein weiterer Gegenstand der vorliegenden Erfindung ist eine Klebemittelzusammensetzung (auch kurz Klebemittel) mit geräuschabsorbierenden Eigenschaften und/oder zur Befestigung wenigstens eines Geräuschabsorbers auf einer Fläche eines Fahrzeugluftreifens, welches wenigstens die folgenden Bestandteile enthält:
- 10 bis 80 Gew.-% wenigstens eines Kautschuks, und
- 11 bis 80 Gew.-% wenigstens eines Polyolefins, und
- 2 bis 20 Gew.-% wenigstens eines Kohlenwasserstoffharzes, und
- 1 bis 30 Gew.-% wenigstens eines Füllstoffs mit einer Dichte von 2,5 bis 12 g/cm³.

Im Folgenden werden die Bestandteile des Klebemittels näher ausgeführt. Sämtliche Ausführungen gelten für das Klebemittel des erfindungsgemäßen Fahrzeugluftreifens und die erfindungsgemäße Klebemittelzusammensetzung bzw. kurz das erfindungsgemäße Klebemittel.

Gemäß einer besonders vorteilhaften Ausführungsform der Erfindung ist das Klebemittel frei von Vulkanisationsagenzien und peroxidischen Verbindungen, d. h. es enthält gemäß dieser Ausführungsform 0 bis 0,001 Gew.-%, idealerweise 0 Gew.-% derartiger Verbindungen, wobei sich die Mengenangabe auf jede Substanz einzeln bezieht.

Somit enthält das Klebemittel besonders bevorzugt keine Substanzen, die zu einer Vernetzung des Klebemittels führen würden und in aus dem Stand der Technik bekannten Dichtmitteln enthalten sind. Das Klebemittel ist somit im Vergleich zu Dichtmitteln als Befestigungsmittel für Geräuschabsorber vergleichsweise einfach und kostengünstig zusammengesetzt und weist zudem eine optimierte Viskosität auf.

Typische Substanzen, die gemäß dieser bevorzugten Ausführungsformen der Erfindung nicht oder nur in den jeweiligen Mengen enthalten sind, sind:
von 0 bis 0,001 Gew.-% Peroxide, z. B. Dibenzoylperoxid
und bevorzugt dabei zudem:
   von 0 bis 0,001 Gew.-% Chinone, z. B. Chinondioxim,

Die (in erhöhtem Maße) geräuschabsorbierenden Eigenschaften des Klebemittels resultieren insbesondere aus den 1 bis 30 Gew.-% wenigstens eines Füllstoffs mit einer Dichte von 2,5 bis 12 g/cm³ und damit einer vergleichsweise hohen Dichte (*engl.* "high density filler") insbesondere in Zusammenhang mit der Menge.

Gemäß vorteilhafter Ausführungsform der Erfindung beträgt die Menge an enthaltenem Füllstoff mit einer Dichte von 2,5 bis 12 g/cm³ 1 bis 30 Gew.-%.
Mit diesen Dichte- und Mengenbereichen ist es möglich, eine Geräuschreduzierung zu erzielen, wobei gleichzeitig die Menge an Füllstoff nicht zu hoch wird, sodass wesentliche Eigenschaften des Klebemittels, wie insbesondere die Klebrigkeit, nicht negativ beeinträchtigt ist.
In den genannten Bereichen werden dann je nach konkreten Anforderungen an die Klebemitteleigenschaften Dichte und Menge des oder der Füllstoffe ausgewählt. Insbesondere können Füllstoffe mit einer vergleichsweise geringen Dichte in vergleichsweise hohen Mengen eingesetzt und Füllstoffe mit einer vergleichsweise hohen Dichte in vergleichsweise geringen Mengen werden, um eine Geräuschreduzierung zu erzielen bei gleichzeitig guter Fließfähigkeit und Klebrigkeit.

Hierbei kann die Menge des wenigstens einen Füllstoffs mit einer Dichte von z. B. 7 bis 12 g/cm³ im unteren Bereich gewählt werden, wie insbesondere 1 bis 15 Gew.-%, wie beispielsweise 1 bis 7 Gew.-%.
Durch die Verwendung von Füllstoffen mit einer Dichte im oberen Bereich des erfindungsgemäßen Dichtebereiches ist es möglich, eine vergleichsweise geringe Menge des Füllstoffs zu verwenden, was das Fließverhalten und die Klebrigkeit des Klebemittels weiter optimiert.

Gemäß vorteilhafter Ausführungsform der Erfindung beträgt die Menge an enthaltenem Füllstoff mit einer Dichte von 2,5 bis 12 g/cm³ 5 bis 30 Gew.-%.
Mit einem oberen Mengenbereich bis zu 30 Gew.-% ist es möglich eine breite Vielfalt an Füllstoffen im genannten Dichtebereich einzusetzen und miteinander zu kombinieren. Dabei werden insbesondere Füllstoffe mit einer Dichte von 2,5 bis 6 g/cm³ verwendet, welche ökonomisch vorteilhaft sind und sich vergleichsweise (im Vergleich zu Füllstoffen mit einer höheren Dichte) einfach in dem Klebemittel dispergieren lassen und vergleichsweise kostengünstig sind.

Für den Fall einer Dichte von 2,5 bis 6 g/cm³ beträgt die Menge insbesondere 5 bis 30 Gew.-%, beispielsweise bevorzugt 7 bis 25 Gew.-%, beispielsweise besonders bevorzugt 7 bis 15 Gew.-%.

Im Falle eines Gemisches aus wenigstens zwei verschiedenen Füllstoffen mit einer Dichte von 2,5 bis 12 g/cm³ beziehen sich die Mengenangaben auf die Gesamtmenge an Füllstoffen mit einer Dichte von 2,5 bis 12 g/cm³, sofern nichts anderes angegeben ist.
Die Dichteangabe der Füllstoffe bezieht sich auf die Dichte des Füllstoffs, wie er als Rohmaterial dem Klebemittel zugesetzt wird.
Die Dichte wird insbesondere gemäß dem Archimedes-Prinzip bestimmt.

Prinzipiell sind alle Füllstoffe mit einer Dichte von 2,5 bis 12 g/cm³ erfindungsgemäß umfasst. Mit einer derartigen Dichte weisen die Füllstoffe eine größere Dichte auf als Füllstoffe, die im Stand der Technik in Dichtmitteln bzw. Klebezusammensetzungen verwendet werden, wie insbesondere Industrieruße mit einer Dichte von 1,8 bis 2,1 g/cm³.
Auch Kieselsäuren, welche als Füllstoff für Reifenmischungen bekannt sind, weisen beispielsweise eine Dichte von ca. 2 g/cm³ auf.
Es können auch zwei oder mehrere Füllstoffe mit einer Dichte von 2,5 bis 12 g/cm³ enthalten sein.
Der wenigstens eine Füllstoff mit einer Dichte von 2,5 bis 12 g/cm³ ist gemäß bevorzugter Ausführungsformen ausgewählt aus Metallverbindungen, insbesondere aus Metalloxiden, Metallcarbonaten und Metallsulfaten sowie Kompositfüllstoffen, die aufgebaut sind aus Metallverbindungen, insbesondere Metalloxiden, Metallcarbonaten und/oder Metallsulfaten, die eine Beschichtung, insbesondere eine Polymerhülle, aufweisen.

Metallbasierte Füllstoffe sind auf einem hohen Qualitätsniveau verfügbar, sodass die Eigenschaften des Klebemittels nicht negativ beeinträchtigt werden.
Die genannten Kompositfüllstoffe weisen zudem den Vorteil auf, dass durch die Polymerhülle chemische Reaktionen der Metallverbindungen, insbesondere Metalloxide, Metallcarbonate und/oder Metallsulfate, mit anderen Substanzen im Klebemittel vermieden werden.
Bei der Polymerhülle kann es sich beispielsweise um (Meth-)Acrylate, Polyanilin, Polyamide wie z. B. Nylon, Polyaramide, Polyester wie z. B. PET (Polyethylenterephthalat), Polyethylen, Polypropylen, oder höhere Homologe der Polyalkylene, oder Polysäuren wie Polymilchsäure, handeln.
Derartige Kompositfüllstoffe mit einer vergleichsweise hohen Dichte von 5 bis 11 g/cm³ sind beispielsweise von der Firma Ecomass Technologies erhältlich.

Gemäß einer bevorzugten Ausführungsform der Erfindung umfasst der wenigstens eine Füllstoff mit einer Dichte von 2,5 bis 12 g/cm³ wenigstens eine Metallverbindung, insbesondere wenigstens ein Metalloxid und/oder wenigstens ein Metallcarbonat und/oder wenigstens ein Metallsulfat und/oder wenigstens ein Kompositfüllstoff einer Metallverbindung, insbesondere der genannten Metallverbindungen, mit einer Polymerhülle.
Prinzipiell sind alle Metalloxide mit einer Dichte von 2,5 bis 12 g/cm³ erfindungsgemäß umfasst, wie insbesondere Eisenoxid (Dichte 5,24 g/cm³), Titandioxid (Dichte 4,2 g/cm³), Calciumoxid (Dichte 3,35 g/cm³), Magnesiumoxid (Dichte 3,6 g/cm³), Aluminiumoxid (Dichte 3,95 g/cm³), Zinkoxid (Dichte 5,6 g/cm³), Bariumoxid (Dichte 5,72 g/cm³).
Beispielhafte Metallcarbonate sind Calciumcarbonat (Dichte je nach Modifikation 2,6 bis 2,8 g/cm³) und Magnesiumcarbonat (Dichte 3 g/cm³).
Ein Beispiel für ein Metallsulfat ist Bariumsulfat (Dichte 4,5 g/cm³).

Gemäß einer bevorzugten Ausführungsform der Erfindung umfasst der Füllstoff mit einer Dichte von 2,5 bis 12 g/cm³ wenigstens ein Eisenoxid, wie beispielsweise Eisen(II,III)-oxid (Fe₃O₄, Magnetit).

Gemäß einer bevorzugten Ausführungsform der Erfindung umfasst der Füllstoff mit einer Dichte von 2,5 bis 12 g/cm³ Bariumoxid.

Einige Oxide sind als Vulkanisationshilfsmittel (Aktivatoren) bekannt, wie insbesondere Zinkoxid, aber auch Magnesiumoxid.
Diese Oxide sind erfindungsgemäß umfasst, solange sie eine Dichte von 2,5 bis 12 g/cm³ aufweisen.

Für den Fall, dass Zinkoxid (ZnO) enthalten ist, beträgt die Menge an enthaltenem Zinkoxid bevorzugt mehr als 1 Gew.-%, insbesondere bevorzugt 1,5 bis 20 Gew.-%, wiederum bevorzugt 3 bis 20 Gew.-%, beispielsweise 5 bis 15 Gew.-%, und ist damit vorrangig nicht als Vulkanisationsagenz enthalten sondern erfindungsgemäß als geräuschabsorbierender Füllstoff.

Für den Fall, dass Magnesiumoxid (MgO) enthalten ist, beträgt die Menge an enthaltenem MgO bevorzugt mehr als 1 Gew.-%, insbesondere bevorzugt 1,5 bis 20 Gew.-%, wiederum bevorzugt 3 bis 20 Gew.-%, beispielsweise 5 bis 15 Gew.-%, und ist damit nicht als Vulkanisationsagenz enthalten sondern erfindungsgemäß als geräuschabsorbierender Füllstoff.
Insbesondere gemäß der Ausführungsform, in der das Klebemittel frei von Vulkanisationsagenzien und peroxidischen Verbindungen ist, kann dennoch ZnO und/oder MgO im Klebemittel enthalten sein.

Gemäß vorteilhafter Ausführungsformen ist die Metallverbindung, insbesondere Metalloxid, Metallcarbonat und/oder Metallsulfat, des wenigstens einen Füllstoffs mit einer Dichte von 2,5 bis 12 g/cm³ ausgewählt aus der Gruppe bestehend aus Eisenoxid, Titandioxid, Calciumoxid, Magnesiumoxid, Aluminiumoxid, Zinkoxid, Bariumoxid, Calciumcarbonat, Magnesiumcarbonat und Bariumsulfat.
Diese Auswahl gilt auch für die oben beschriebenen Kompositfüllstoffe.

Gemäß vorteilhafter Ausführungsformen der Erfindung beträgt die Dichte des wenigstens einen Füllstoffs 2,5 bis 8 g/cm³, besonders bevorzugt 3 bis 7 g/cm³.

Gemäß vorteilhafter Ausführungsformen der Erfindung enthält das Klebemittel genau einen Füllstoff (bzw. genau eine Füllstoffart) mit einer Dichte von 2,5 bis 12 g/cm³.
Hierdurch ergibt sich eine vergleichsweise einfache Herstellbarkeit des Klebemittels, insbesondere bei der Dosierung.

Gemäß weiterer vorteilhafter Ausführungsformen enthält das Klebemittel wenigstens zwei verschiedene Füllstoffe mit einer Dichte von 2,5 bis 12 g/cm³.
Gemäß einer bevorzugten Ausführungsform der Erfindung enthält es hierbei ein Gemisch von Eisenoxid mit wenigstens einem weiteren Füllstoff mit einer Dichte von 2,5 bis 12 g/cm³.
Durch ein Gemisch von wenigstens zwei verschiedenen Füllstoffen im erfindungsgemäßen Dichtebereich können die Eigenschaften des Klebemittels, je nach Anforderungen fein eingestellt werden. Dabei kann insbesondere der Frequenzbereich der Geräuschabsorption durch einen breiteren Dichtebereich der enthaltenen Füllstoffe verbreitert werden. Somit können verschiedene Geräuschfrequenzen mit einem Breitband an Dichten abgedeckt werden.

Gemäß vorteilhafter Ausführungsformen der Erfindung enthält das Klebemittel 1 bis 30 Gew.-% wenigstens eines weiteren Füllstoffs, der eine Dichte von weniger als 2,5 g/cm³ aufweist, wodurch die Viskosität des Klebemittels optimal eingestellt werden kann. Die Menge des wenigstens einen weiteren Füllstoffs beträgt hierzu besonders bevorzugt 1 bis 20 Gew.-%, wiederum besonders bevorzugt 5 bis 20 Gew.-%, beispielsweise bevorzugt 5 bis 10 Gew.-%, jeweils bezogen auf die Gesamtmenge an Klebemittel.
Bei dem weiteren Füllstoff kann es sich um alle dem Fachmann bekannten Füllstoffe handeln, wie insbesondere verstärkende Füllstoffe, wie Ruß und/oder Kieselsäure, wobei insbesondere gefällte Kieselsäuren gemeint und bevorzugt sind, die als Füllstoffe für Reifenkautschukmischungen bekannt sind.
Ferner sind weitere verstärkende und nicht verstärkende Füllstoffe, insbesondere Siliziumoxid basierte Füllstoffe, wie Silikate oder Sand, denkbar sowie ggf. verstärkende Füllstoffe wie z.B. Graphit und Graphene und sogenannte "carbon-silica dual-phase filler".

Gemäß einer bevorzugten Ausführungsform der Erfindung umfasst der weitere Füllstoff wenigstens einen Ruß. Dies hat den Vorteil, dass die Kohäsion des Klebemittels erhöht und die Klebrigkeit des Klebemittels während des Herstellverfahrens erniedrigt wird. Gleichzeitig werden die Ortsfestigkeit und die Reißeigenschaften des Klebemittels verbessert.
Als Ruße sind im Rahmen der vorliegenden Erfindung prinzipiell alle dem Fachmann bekannten Ruß-Typen denkbar.
Gemäß einer vorteilhaften Ausführungsform der Erfindung wird ein Ruß eingesetzt, der eine Jodadsorptionszahl gemäß ASTM D 1510 von 20 bis 180 g/kg, besonders bevorzugt 30 bis 140 g/kg, und eine DBP-Zahl gemäß ASTM D 2414 von 30 bis 200 ml/100 g, bevorzugt 90 bis 180 ml/100g, besonders bevorzugt 110 bis 180 ml/100g, aufweist.
Gemäß einer weiteren bevorzugten Ausführungsform der Erfindung wird ein Ruß des Typs N326 verwendet.
Es ist auch ein Gemisch von zwei oder mehreren Rußen denkbar.

Gemäß einer weiteren bevorzugten Ausführungsform der Erfindung umfasst der weitere Füllstoff wenigstens eine Kieselsäure (engl. "silica").
Hierdurch wird eine optimale Verstärkung des Klebemittels erzielt und eine gute Viskositätskontrolle und -einstellung ermöglicht. Zudem wird mit wenigstens einer Kieselsäure die Kohäsion des Klebemittels erhöht und die Klebrigkeit des Klebemittels während des Herstellverfahrens erniedrigt wird. Gleichzeitig werden die Ortsfestigkeit und die Reißeigenschaften des Klebemittels verbessert.
Es ist auch ein Gemisch von zwei oder mehreren Kieselsäuren denkbar.

Bei den Kieselsäuren kann es sich um die dem Fachmann bekannten Kieselsäuren, die als Füllstoff für Reifenkautschukmischungen geeignet sind, handeln. Als Kieselsäuren können somit z. B. sowohl jene des Typs Ultrasil® VN3 (Handelsname) der Firma Evonik als auch Kieselsäuren mit einer vergleichsweise niedrigen BET-Oberfläche (wie z. B. Zeosil® 1115 oder Zeosil® 1085 der Firma Solvay) als auch hoch dispergierbare Kieselsäuren, so genannte HD-Kieselsäuren (z. B. Zeosil® 1165 MP der Firma Solvay) verwendet werden.

Ferner ist ein Gemisch der genannten weiteren Füllstoffe denkbar und bevorzugt, wie insbesondere wenigstens ein Ruß in Kombination mit wenigstens einer Kieselsäure, wobei sich ebenfalls die genannten Vorteile ergeben.

Bei dem Kautschuk kann es sich prinzipiell um jeglichen dem Fachmann bekannten Kautschuk handeln.
Für den Fall, dass das Klebemittel zwei oder mehrere verschiedene Kautschuke enthält, beträgt die Gesamtmenge 10 bis 80 Gew.-% bzw. sind die Mengenangaben auf die Gesamtmenge an enthaltenen Kautschuken bezogen, sofern nichts anderes angegeben ist.
Gemäß einer bevorzugten Ausführungsform der Erfindung handelt es sich um wenigstens einen Dienkautschuk.
Bevorzugt enthält das Klebemittel somit 10 bis 80 Gew.-% wenigstens eines Dienkautschuks.
Als Dienkautschuke werden Kautschuke bezeichnet, die durch Polymerisation oder Copolymerisation von Dienen und/oder Cycloalkenen entstehen und somit entweder in der Hauptkette oder in den Seitengruppen C=C-Doppelbindungen aufweisen.
Der wenigstens eine Dienkautschuk ist dabei bevorzugt ausgewählt aus der Gruppe bestehend aus natürlichem Polyisopren (Naturkautschuk, NR), synthetischem Polyisopren (IR), epoxidiertem Polyisopren, Butadien-Kautschuk (Polybutadien, BR), Butadien-Isopren-Kautschuk, lösungspolymerisiertem Styrol-Butadien-Kautschuk (SSBR), emulsionspolymerisiertem Styrol-Butadien-Kautschuk (ESBR), Styrol-Isopren-Kautschuk, Flüssigkautschuken mit einem Gewichtsmittel des Molekulargewichts Mw gemäß GPC von größer als 20000 g/mol, Halobutyl-Kautschuk, Polynorbornen, Isopren-Isobutylen-Copolymer, Ethylen-Propylen-DienKautschuk, Nitril-Kautschuk, Chloropren-Kautschuk, Acrylat-Kautschuk, FluorKautschuk, Silikon-Kautschuk, Polysulfid-Kautschuk, Epichlorhydrin-Kautschuk, Styrol-Isopren-Butadien-Terpolymer, hydriertem Acrylnitrilbutadien-Kautschuk und hydriertem Styrol-Butadien-Kautschuk.

Gemäß einer besonders vorteilhaften Ausführungsform der Erfindung ist der Kautschuk ausgewählt aus der Gruppe bestehend aus Naturkautschuk (NR), synthetisches Polyisopren (IR), Butadien-Kautschuk (BR), Styrol-Butadien-Kautschuk (SBR), Butyl-Kautschuk (IIR) und Halobutyl-Kautschuk. Derartige Kautschuke finden in Bauteilen von Fahrzeugreifen Verwendung und sind daher besonders kompatibel mit den an das Klebemittel angrenzenden Bauteilen.

Bei dem Butylkautschuk kann es sich um jeden dem Fachmann bekannten Butylkautschuk handeln. Butylkautschuk im Klebemittel hat den Vorteil, dass es kompatibel mit dem Kautschuk der Innenschicht des Fahrzeugreifens ist und eine vergleichsweise hohe Luftdichtigkeit aufweist. Zudem tragen 10 bis 80 Gew.-% wenigstens eines Butylkautschuks dazu bei, dass das Klebemittel die für die beschriebene Anwendung geeignete Viskosität aufweist.

Gemäß einer bevorzugten Ausführungsform der Erfindung beträgt die Menge des wenigstens einen Butylkautschuks 20 bis 40 Gew.-%, besonders bevorzugt 20 bis 38 Gew.-%, wiederum besonders bevorzugt 20 bis 28 Gew.-%, ganz besonders bevorzugt 23 bis 28 Gew.-%. Mit diesen bevorzugten Ausführungsformen ist die Viskosität und Klebrigkeit des Klebemittels weiter optimiert.

An dieser Stelle wird betont, dass das Klebemittel nicht die üblicherweise vorhandene Innenschicht des Fahrzeugluftreifens ersetzt. Stattdessen weist der erfindungsgemäße Fahrzeugluftreifen alle sonstigen Komponenten, also Laufstreifen, Seitenwand, Karkasslage, Gürtel, und bevorzugt auch eine Innenschicht, wie im Stand der Technik bekannt auf.
Gemäß einer besonders bevorzugten Ausführungsform der Erfindung weist der Fahrzeugluftreifen eine Innenschicht (Innerliner) auf, die wenigstens einen Halo-Butylkautschuk und/oder wenigstens einen Butylkautschuk enthält, wobei das Klebemittel enthaltend die oben genannten Bestandteile im Reifeninneren auf der nach radial innen gerichteten Oberfläche der Innenschicht zur Befestigung des Geräuschabsorbers haftet.

Gemäß einer weiteren bevorzugten Ausführungsform der Erfindung enthält das Klebemittel wenigstens einen Butylkautschuk und wenigstens einen Kautschuk, der ausgewählt ist aus der Gruppe bestehend aus Naturkautschuk (NR), synthetisches Polyisopren (IR), Butadien-Kautschuk (BR), Styrol-Butadien-Kautschuk (SBR) und Halobutyl-Kautschuk, wobei die Gesamtmenge 10 bis 80 Gew.-% beträgt.
Hierbei sind sämtliche Mengenverhältnisse an Butyl-Kautschuk zu übrigem Kautschuk denkbar. Gemäß einer vorteilhaften Weiterbildung der Erfindung sind bezogen auf die Gesamtmenge an enthaltenen Kautschuken davon 50 bis 99 Gew.-% Kautschuke ausgewählt aus der Gruppe bestehend aus Naturkautschuk (NR), synthetisches Polyisopren (IR), Butadien-Kautschuk (BR), Styrol-Butadien-Kautschuk (SBR) und Halobutyl-Kautschuk und 1 bis 50 Gew.-% wenigstens eines Butyl-Kautschukes.

Gemäß vorliegender Erfindung enthält das Klebemittel 11 bis 80 Gew.-% wenigstens eines Polyolefins. Bevorzugt beträgt die Menge des wenigstens einen Polyolefins 31 bis 80 Gew.-%, besonders bevorzugt 35 bis 70 Gew.-%, wiederum besonders bevorzugt 35 bis 60 Gew.-%, ganz besonders bevorzugt 35 bis 57 Gew.-%. Mit derartigen Mengen werden ein optimales Fließverhalten und eine optimale Klebrigkeit bei einer gleichzeitig guten Herstellbarkeit (Prozessierbarkeit) des Klebemittels erzielt.

Das wenigstens eine Polyolefin weist bevorzugt ein Zahlenmittel der Molekulargewichtsverteilung Mn gemäß GPC von 0,1 bis 5 kg/mol, besonders bevorzugt 0,4 bis 1,6 kg/mol, ganz besonders bevorzugt 0,4 bis 1,4 kg/mol, wiederum bevorzugt 1 bis 1,4 kg/mol, wiederum besonders bevorzugt 1,1 bis 1,4 kg/mol, beispielsweise 1,3 kg/mol, auf.
Ein Polyolefin mit den genannten Bereichen für das Mn ist besonders geeignet, um die gewünschte Fließfähigkeit bei gleichzeitig starker Klebrigkeit des Klebemittels zu erzeugen.
Hierbei ist es besonders bevorzugt, dass das wenigstens eine Polyolefin wenigstens ein Polybuten ist.
Polybuten ist besonders geeignet, um die gewünschten Eigenschaften des Klebemittels einzustellen. Für das wenigstens eine Polybuten gelten insbesondere die oben genannten bevorzugten, besonders bevorzugten usw. Zahlenmittel der Molekulargewichtsverteilung Mn.
Derartige Polybutene sind im Handel erhältlich.

Gemäß einer besonders vorteilhaften Weiterbildung der Erfindung weist das wenigstens eine Polyolefin einen Chlorgehalt von kleiner oder gleich 5 mg/kg, bevorzugt kleiner oder gleich 3 mg/kg, auf. Die Angabe bezieht sich auf mg Chlor pro einem kg des Polyolefins. In einer bevorzugten Ausführungsform der Erfindung enthält das Klebemittel wenigstens ein Polyolefin mit einem Chlorgehalt von kleiner oder gleich 1,5 mg/kg, besonders bevorzugt kleiner als 1 mg/kg. Bevorzugt ist das Polyolefin hierbei ein Polybuten.
Gemäß einer besonders bevorzugten Ausführungsform der Erfindung enthält das Klebemittel somit wenigstens ein Polybuten mit einem Chlorgehalt von kleiner oder gleich 5 mg/kg, bevorzugt kleiner oder gleich 3 mg/kg, besonders bevorzugt kleiner als 1 mg/kg. Geeignete Polybutene, auch Polyisobutene genannt, sind beispielsweise unter den Handelsnamen Glissopal® der Firma BASF bekannt. Insbesondere geeignet sind hierbei Glissopal® V-500, V-640 oder V-190.
Mit einem derartigen (nahezu) chlorfreien Polybuten kann insbesondere ein Geräuschabsorber aus Schaumstoff, bevorzugt Polyurethan (PU), eingesetzt werden, wobei das chlorfreie Polybuten besonders kompatibel mit dem (PU-)Schaumstoff ist und keine oder kaum Zersetzungsprozesse stattfinden.

Das Klebemittel enthält erfindungsgemäß 2 bis 20 Gew.-% wenigstens eines Kohlenwasserstoffharzes. Bevorzugt beträgt die Menge des wenigstens einen Kohlenwasserstoffharzes 5 bis 10 Gew.-%, besonders bevorzugt 5 bis 8 Gew.-%, ganz besonders bevorzugt 5 bis 6,5 Gew.-%.
Mit derartigen bevorzugten und besonders bevorzugten Mengen werden die Klebrigkeit und die Viskosität des Klebemittels weiter optimiert.

Dem Fachmann ist klar, dass Kohlenwasserstoffharze Polymere sind, die aus Monomeren aufgebaut sind, wobei das Kohlenwasserstoffharz durch die Verknüpfung der Monomere zueinander formal aus Derivaten der Monomere aufgebaut ist.
Der Begriff "Kohlenwasserstoffharze" umfasst im Rahmen der vorliegenden Anmeldung Harze, die Kohlenstoffatome und Wasserstoffatome aufweisen sowie optional Heteroatome, wie insbesondere Sauerstoffatome, aufweisen können.

Das Kohlenwasserstoffharz kann ein Homopolymer oder ein Copolymer sein. Unter Homopolymer wird in der vorliegenden Anmeldung ein Polymer verstanden, welches gemäß Römpp Online (Auszug vom 02.01.2017, letzte Aktualisierung des Artikels August 2008) "aus Monomeren nur einer Art entstanden ist".
Unter Copolymer wird im Rahmen der vorliegenden Erfindung ein Polymer verstanden, welches aus mehreren, d.h. zwei oder mehr, verschiedenen Monomeren aufgebaut ist. Im Rahmen der vorliegenden Erfindung kann das Kohlenwasserstoffharz daher z.B. auch ein Copolymer aus drei verschiedenen Monomeren sein.

Bei den Monomeren kann es sich um alle dem Fachmann bekannten Monomere von Kohlenwasserstoffharzen handeln, wie aliphatische Monomere, insbesondere aliphatische C₅-Monomere, weitere ungesättigte Verbindungen, die kationisch polymerisiert werden können, enthaltend Aromaten und/oder Terpene und/oder Alkene und/oder Cycloalkene.
Bevorzugte Monomere sind insbesondere C₅ und C₉-Monomere.

Bei den Aromaten (aromatische Monomere) kann es sich beispielsweise um alpha-Methylstyrol und/oder Styrol und/oder Vinyltoluol und/oder Inden und/oder Cumaron und/oder Methylinden und/oder Methylcumaron und/oder Phenol handeln. Bevorzugt handelt es sich bei den aromatischen Monomeren um alpha-Methylstyrol und/oder Styrol und/oder Vinyltoluol und/oder Inden und/oder Cumaron und/oder Methylinden und/oder Methylcumaron.
Gemäß einer bevorzugten Ausführungsform der Erfindung umfasst das wenigstens eine Kohlenwasserstoffharz kein phenolisches Kohlenwasserstoffharz, bzw. basiert das wenigstens eine Kohlenwasserstoffharz bevorzugt nicht auf Phenol als Monomer. Im Falle eines Gemisches aus wenigsten zwei Kohlenwasserstoffharzen basiert somit bevorzugt keines auf Phenol als Monomer. Das Klebemittel ist somit gemäß einer bevorzugten Ausführungsform der Erfindung frei von Phenolharzen, d. h. enthält 0 bis 0,1 Gew.-%, idealerweise 0 Gew.-% Phenolharze.

Gemäß Römpp Online ist der Begriff "Olefine" die "Gruppenbezeichnung für acyclische und cyclische aliphatische Kohlenwasserstoffe mit einer oder mehreren reaktiven C=C-Doppelbindungen im Molekül, die heute besser als Alkene bzw. Cycloalkene bezeichnet werden, in weiterem Sinne auch Bezeichnung für deren substituierte Derivate...." Im Rahmen der vorliegenden Erfindung werden daher ungesättigte Terpene, Alkene und Cycloalkene unter den Oberbegriff Olefine zusammengefasst.
Bei den Alkenen kann es sich beispielsweise um 1-Buten und/oder 2-Buten und/oder Butadien handeln.

Gemäß einer bevorzugten Ausführungsform der Erfindung handelt es sich bei dem Kohlenwasserstoffharz um wenigstens ein aliphatisches Harz, also ein Harz welches keine aromatischen Ringsysteme enthält. Ein derartiges Harz besteht zu 100 Gew.-% aus aliphatischen Monomeren bzw. dessen Derivaten.
Gemäß einer weiteren Ausführungsform der Erfindung besteht das Harz zu 10 bis 99 Gew.-%, bevorzugt 50 bis 99 Gew.-%, besonders bevorzugt 70 bis 99 Gew.-%, aus aliphatischen und zu 1 bis 90 Gew.-%, bevorzugt 1 bis 50 Gew.-%, besonders bevorzugt 1 bis 30 Gew.-% aus aromatischen Monomeren.

Gemäß einer besonders bevorzugten Ausführungsform der Erfindung handelt es sich bei dem Kohlenwasserstoffharz um wenigstens ein Harz, welches wenigstens aus C₅-Monomeren aufgebaut ist und dem Fachmann als sogenanntes C₅-Harz bekannt ist. Hiermit werden besonders gute Eigenschaften des Klebemittels, insbesondere ein optimiertes Fließverhalten bei gleichzeitig guter Klebrigkeit, erzielt.

Bei den aliphatischen C₅-Monomeren kann es sich um Monomere der C₅-Erdölfraktion, z.B. Isopren, und/oder Monomere der Terpene und/oder Cycloolefine und/oder Olefine, wie z.B. Penten, handeln. Unter C₅ ist zu verstehen, dass diese Monomere aus fünf Kohlenstoffatomen aufgebaut sind.
Ferner ist dem Fachmann bekannt, dass die Cs-Erdölfraktion außer aliphatischen Monomeren mit fünf Kohlenstoffatomen andere aliphatische Monomere (Bausteine) mit z.B. vier, also C₄-Monomere, oder sechs Kohlenstoffatomen, C₆-Monomere, enthalten kann.

Das Klebemittel kann ferner weitere Bestandteile enthalten. wie insbesondere Weichmacher, wie z. B. Öl(e).
Gemäß einer bevorzugten Ausführungsform der Erfindung enthält das Klebemittel 0,2 bis 12 Gew.-% wenigstens eines Weichmachers, wobei es insbesondere und bevorzugt ein Gemisch von zwei verschiedenen Weichmachern enthält.
Durch die Verwendung von 0,2 bis 12 Gew.-%, bevorzugt 2 bis 6 Gew.-%, wenigstens eines Weichmachers wird eine gute Verarbeitbarkeit und eine weiter optimierte Viskosität des Klebemittels erzielt.

Bei den Weichmachern kann es sich um alle dem Fachmann bekannten Weichmacher, insbesondere Öle, handeln, wie insbesondere aromatische, naphthenische oder paraffinische Mineralölweichmacher, wie z.B. MES (mild extraction solvate) oder RAE (Residual Aromatic Extract) oder TDAE (treated distillate aromatic extract), oder Rubber-to-Liquid-Öle (RTL) oder Biomass-to-Liquid-Öle (BTL) bevorzugt mit einem Gehalt an polyzyklischen Aromaten von weniger als 3 Gew.-% gemäß Methode IP 346. Mineralöle sind als Weichmacher besonders bevorzugt.
Bei der Verwendung von Mineralöl ist dieses bevorzugt ausgewählt aus der Gruppe, bestehend aus DAE (Destillated Aromatic Extracts) und/oder RAE (Residual Aromatic Extract) und/oder TDAE (Treated Destillated Aromatic Extracts) und/oder MES (Mild Extracted Solvents) und/oder naphthenische Öle.

Gemäß einer bevorzugten Ausführungsform der Erfindung besteht das Klebemittel aus Kautschuk, Polyolefin, Kohlenwasserstoffharz, Füllstoff und Weichmacher, wobei die obigen Ausführungen zu Art und Menge der jeweiligen Substanzen gelten. Insbesondere besteht das Klebemittel gemäß einer bevorzugten Ausführungsform der Erfindung aus
- 10 bis 50 Gew.-% wenigstens eines Kautschuks, und
- 31 bis 80 Gew.-% wenigstens eines Polyolefins, und
- 2 bis 20 Gew.-% wenigstens eines Kohlenwasserstoffharzes, und
- 1 bis 20 Gew.-% wenigstens eines Füllstoffs mit einer Dichte von 2,5 bis 12 g/cm³, und
- 1 bis 30 Gew.-% wenigstens eines weiteren Füllstoffs mit einer Dichte von weniger als 2,5 g/cm³, und
- 0,2 bis 12 Gew.-% wenigstens eines Weichmachers.

Hierbei ergibt die Summe der genannten Bestandteile bevorzugt 100 Gew.-%.
Ein derartiges Klebemittel ist besonders hinsichtlich Verarbeitbarkeit, Fließverhalten und Ortsfestigkeit optimiert. Es weist zudem aufgrund der Zusammensetzung eine optimale Klebrigkeit auf.

Ferner können jedoch auch weitere Bestandteile enthalten sein, die dann insgesamt zu den 100 Gew.-% beitragen.

Das Klebemittel wird insbesondere durch - bevorzugt intensives - Vermischen der Substanzen hergestellt, wobei dies in einer oder mehreren Mischstufen erfolgen kann. Hierbei können die dem Fachmann bekannten Mischvorrichtungen, wie Innenmischer und/oder Extruder, verwendet werden. Auch die Mischdauer und Mischtemperatur können je nach Zusammensetzung und Viskosität des Klebemittels eingestellt werden.
Beispielsweise kann das Klebemittel auch in einem Extruder, bevorzugt einem Doppelschneckenextruder, hergestellt werden.
Ferner ist es denkbar, dass das Klebemittel zur - bevorzugt zwischenzeitlichen - Verringerung der Viskosität unter Zuhilfenahme von Lösungsmitteln gemischt wird.

Das Klebemittel kann auf jede dem Fachmann bekannte Weise auf die Reifeninnenfläche, insbesondere der dem Laufstreifen gegenüberliegenden Fläche aufgebracht werden.
Bevorzugt wird es durch Aufsprühen oder mit einer Hochdruckpumpe aufgebracht.

Das Klebemittel wird bevorzugt je nach Ausführungsform wie oben beschrieben mit einer Schichtdicke (in radialer Richtung) von 0,05 bis 10 mm aufgetragen, wobei sich in axialer Richtung herstellungsbedingte Schwankungen ergeben können. Das Klebemittel kann dabei vollflächig oder nur in bestimmten Bereichen aufgebracht werden.

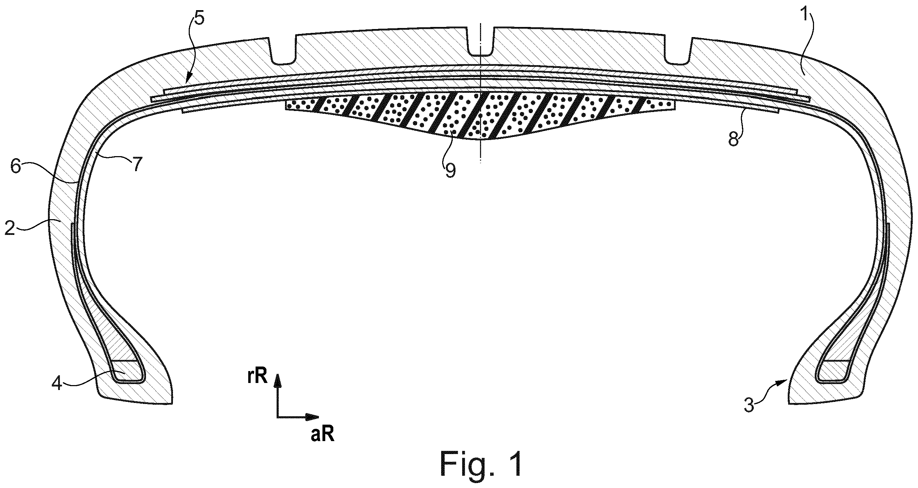

Im Folgenden soll die Erfindung anhand eines Ausführungsbeispiels näher erläutert werden. Ein Beispiel eines erfindungsgemäßen Fahrzeugluftreifens ist in Figur 1 gezeigt.

In Fig. 1 ist ein Querschnitt durch einen PKW-Radialreifen dargestellt, welcher einen profilierten Laufstreifen 1, Seitenwände 2, Wulstbereiche 3, Wulstkerne 4 sowie einen mehrlagigen Gürtelverband 5 und eine Karkasseinlage 6 aufweist. An seiner inneren Fläche ist der Reifen mit einer Innenschicht 7 aus einer luftdicht ausgeführten Gummimischung bedeckt. An der dem Laufstreifen 1 gegenüberliegenden inneren Oberfläche der Innenschicht 7 ist nachträglich (beim fertigen Reifen) ein Klebemittel 8 aufgebracht.

Das Klebemittel 8 besteht gemäß einem ersten Beispiel aus folgenden Substanzen:
27,3 Gew.-% Butylkautschuk,
55,8 Gew.-% Polybuten mit einem Mn von 1300 g/mol,
5,3 Gew.-% aliphatisches Kohlenwasserstoffharz (C₅-Harz),
5 Gew.-% Eisen(II,III)-oxid, beispielsweise erhältlich unter dem Handelsnamen
MagniF, der Fa. LKAB Minerals erhältlich, Dichte 5,2g/cm³,
8,4 Gew.-% Ruß N326 als Füllstoff,
3,2 Gew.-% Mineralölweichmacher.

Dieses Klebemittel weist beispielsweise eine komplexe Viskosität bei 120 °C (0,02 Hz, Frequenzdurchlauf, Platte-Platte-Rheometer) von 2700 Pas (Pascal mal Sekunde) auf und ist somit besonders hinsichtlich Verarbeitbarkeit, Fließverhalten, Ortsfestigkeit optimiert. Es weist zudem aufgrund der Zusammensetzung eine optimale Klebrigkeit auf.

Am Klebemittel 8 haftet ein schallabsorbierender Schaumstoffring als Geräuschabsorber 9, welcher unmittelbar nach dem Aufbringen des Klebemittels 8 aufgepresst wird, wie nachfolgend beschrieben wird. Der schallabsorbierende Schaumstoffring ist bezüglich seiner schallabsorbierenden Eigenschaften auf die Reifenhohlraumfrequenz abgestimmt. Der Geräuschabsorber 9 in Form eines Schaumstoffrings weist beispielsweise hier einen etwa langgestreckt dreieckförmigen, bezüglich des Reifenäquators symmetrischen Querschnitt auf. Der Schaumstoff des Schaumstoffringes ist ein offenzelliger Schaumstoff, da dieser am besten dazu geeignet ist, Schall zu absorbieren. Der Schaumstoff umfasst beispielsweise Polyurethan.

Das Klebemittel wird, beispielsweise durch Aufsprühen, derart eingebracht, dass es zumindest die dem Laufstreifen 1 gegenüberliegende innere Oberfläche oder nur Teile davon bedeckt. Zur optimalen Verteilung des Klebemittels an der Innenfläche kann der Reifen in Rotation versetzt werden. Das Klebemittel wird gemäß diesem Beispiel in einer solchen Menge eingebracht, dass die Dicke bzw. Schichtdicke des Klebemittels zwischen 0,05 mm und 3 mm, beispielsweise 1 mm, beträgt. Zumindest unmittelbar nach dem Aufbringen soll das Klebemittel relativ flüssigsein, um eine optimale Verteilung des Klebemittels über die Oberfläche zu erreichen und zudem klebrig sein. Zu diesem Zeitpunkt wird der vorgefertigte Schaumstoffring in das Innere des Reifens eingebracht und angedrückt. Nach dem Einbringen haftet der Schaumstoffring an dem elastisch deformierbaren, aber weitestgehend ortsfest verbleibenden Klebemittel 8.

### Bezugszeichenliste

- 1.........: Laufstreifen
- 2.........: Seitenwand
- 3.........: Wulstbereich
- 4.........: Wulstkern
- 5.........: Gürtelverband
- 6.........: Karkasseinlage
- 7.........: Innenschicht
- 8.........: Klebemittel
- 9.........: Geräuschabsorber
- rR.......: radiale Richtung (in Pfeilrichtung von radial innen nach radial außen)
- aR .....: axiale Richtung

## Patentansprüche

1. Fahrzeugluftreifen, **dadurch gekennzeichnet, dass** er in seinem Inneren an wenigstens einer Innenfläche zumindest teilweise wenigstens ein anhaftendes Klebemittel (8) aufweist, welches wenigstens folgende Bestandteile enthält:
- 10 bis 80 Gew.-% wenigstens eines Kautschuks, und
- 11 bis 80 Gew.-% wenigstens eines Polyolefins, und
- 2 bis 20 Gew.-% wenigstens eines Kohlenwasserstoffharzes, und
- 1 bis 30 Gew.-% wenigstens eines Füllstoffs mit einer Dichte von 2,5 bis 12 g/cm³.

2. Fahrzeugluftreifen nach Anspruch 1, **dadurch gekennzeichnet, dass** er wenigstens einen in seinem Inneren an der dem Laufstreifen (1) gegenüberliegenden Innenfläche an dem Klebemittel (8) haftend angebrachten Geräuschabsorber (9) aufweist.

3. Fahrzeugluftreifen nach Anspruch 2, **dadurch gekennzeichnet, dass** die Schichtdicke des Klebemittels in radialer Richtung 0,5 bis 3 mm, bevorzugt 0,5 bis 2 mm, besonders bevorzugt 1 bis 1,5 mm, beträgt.

4. Fahrzcugluftrcifcn nach einem der vorherigen Ansprüche, **dadurch gekennzeichnet, dass** der wenigstens eine Geräuschabsorber (9) wenigstens ein poröses Dämpfungselement ist.

5. Fahrzeugluftreifen nach einem der Ansprüche 2 bis 4, **dadurch gekennzeichnet, dass** der Geräuschabsorber wenigstens ein Polyurethan enthält.

6. Fahrzeugluftreifen nach Anspruch 1, **dadurch gekennzeichnet, dass** die Schichtdicke des Klebemittels in radialer Richtung zumindest teilweise 2 bis 20 mm, bevorzugt 3,5 bis 20 mm, beträgt, und in diesen Bereichen mit einer Schichtdicke von 2 bis 20 mm, bevorzugt 3,5 bis 20 mm, kein zusätzlicher Geräuschabsorber angebracht ist.

7. Fahrzeugluftreifen nach einem der vorherigen Ansprüche, **dadurch gekennzeichnet, dass** das Klebemittel frei von Vulkanisationsagenzien, und peroxidischen Verbindungen ist.

8. Fahrzeugluftreifen nach einem der vorherigen Ansprüche, **dadurch gekennzeichnet, dass** der Füllstoff mit einer Dichte von 2,5 bis 12 g/cm³ ausgewählt ist aus Metallverbindungen, insbesondere Metalloxiden, Metallcarbonaten und Metallsulfaten sowie Kompositfüllstoffen, die aufgebaut sind aus Metallverbindungen, insbesondere Mctalloxidcn, Metallcarbonaten und/oder Metallsulfaten, die eine Beschichtung, insbesondere eine Polymerhülle, aufweisen.

9. Fahrzeugluftreifen nach Anspruch 8, **dadurch gekennzeichnet, dass** die Metallverbindung, insbesondere Metalloxid, Metallcarbonat und/oder Metallsulfat, des wenigstens einen Füllstoffs mit einer Dichte von 2,5 bis 12 g/cm³ ausgewählt ist aus der Gruppe bestehend aus Eisenoxid, Titandioxid, Calciumoxid, Magnesiumoxid, Aluminiumoxid, Zinkoxid, Bariumoxid, Calciumcarbonat, Magnesiumcarbonat und Bariumsulfat.

10. Klebemittelzusammensetzung zur Befestigung eines Geräuschabsorbers (9) auf einer Fläche eines Fahrzeugluftreifens, **dadurch gekennzeichnet, dass** die Zusammensetzung wenigstens die folgenden Bestandteile enthält:
- 10 bis 80 Gew.-% wenigstens eines Kautschuks, und
- 11 bis 80 Gew.-% wenigstens eines Polyolefins, und
- 2 bis 20 Gew.-% wenigstens eines Kohlenwasserstoffharzes, und
- 1 bis 30 Gew.-% wenigstens eines Füllstoffs mit einer Dichte von 2,5 bis 12 g/cm³.

## Claims

1. Pneumatic vehicle tyre, **characterized in that** in its interior, on at least one inner surface, it at least partially comprises at least one adherent adhesive (8) containing at least the following constituents:
- 10% to 80% by weight of at least one rubber and
- 11% to 80% by weight of at least one polyolefin and
- 2% to 20% by weight of at least one hydrocarbon resin and
- 1% to 30% by weight of at least one filler having a density of 2.5 to 12 g/cm³.

2. Pneumatic vehicle tyre according to Claim 1, **characterized in that** in its interior, on the inner surface opposite the tread (1), it comprises sound absorbers (9) adherently attached to the adhesive (8) .

3. Pneumatic vehicle tyre according to Claim 2, **characterized in that** the layer thickness of the adhesive in the radial direction is 0.5 to 3 mm, preferably 0.5 to 2 mm, particularly preferably 1 to 1.5 mm.

4. Pneumatic vehicle tyre according to any of the preceding claims, **characterized in that** the at least one sound absorber (9) is at least one porous damping element.

5. Pneumatic vehicle tyre according to any of Claims 2 to 4, **characterized in that** the sound absorber contains at least one polyurethane.

6. Pneumatic vehicle tyre according to Claim 1, **characterized in that** the layer thickness of the adhesive in the radial direction is at least partially 2 to 20 mm, preferably 3.5 to 20 mm, and in these regions having a layer thickness of 2 to 20 mm, preferably 3.5 to 20 mm, no additional sound absorber is attached.

7. Pneumatic vehicle tyre according to any of the preceding claims, **characterized in that** the adhesive is free from vulcanization agents and peroxidic compounds.

8. Pneumatic vehicle tyre according to any of the preceding claims, **characterized in that** the filler having a density of 2.5 to 12 g/cm³ is selected from metal compounds, in particular metal oxides, metal carbonates and metal sulfates, and composite fillers constructed from metal compounds, in particular metal oxides, metal carbonates and/or metal sulfates, having a coating, in particular a polymer shell.

9. Pneumatic vehicle tyre according to Claim 8, **characterized in that** the metal compound, in particular metal oxide, metal carbonate and/or metal sulfate, of the at least one filler having a density of 2.5 to 12 g/cm³ is selected from the group consisting of iron oxide, titanium dioxide, calcium oxide, magnesium oxide, aluminium oxide, zinc oxide, barium oxide, calcium carbonate, magnesium carbonate and barium sulfate.

10. Adhesive composition for securing a sound absorber (9) to a surface of a pneumatic vehicle tyre, **characterized in that** the composition contains at least the following constituents:
- 10% to 80% by weight of at least one rubber and
- 11% to 80% by weight of at least one polyolefin and
- 2% to 20% by weight of at least one hydrocarbon resin and
- 1% to 30% by weight of at least one filler having a density of 2.5 to 12 g/cm³.

## Revendications

1. Pneu de véhicule, **caractérisé en ce qu'**il comprend au moins partiellement dans son espace intérieur sur au moins une surface intérieure au moins un agent adhésif adhérent (8), qui contient au moins les constituants suivants :
- 10 à 80 % en poids d'au moins un caoutchouc, et
- 11 à 80 % en poids d'au moins une polyoléfine, et
- 2 à 20 % en poids d'au moins une résine hydrocarbonée, et
- 1 à 30 % en poids d'au moins une charge ayant une masse volumique de 2,5 à 12 g/cm³.

2. Pneu de véhicule selon la revendication 1, **caractérisé en ce qu'**il comprend au moins un absorbeur de bruit (9) disposé par adhérence sur l'agent adhésif (8) dans son espace intérieur sur la surface intérieure opposée à la bande de roulement (1).

3. Pneu de véhicule selon la revendication 2, **caractérisé en ce que** l'épaisseur de couche de l'agent adhésif dans la direction radiale est de 0,5 à 3 mm, de préférence de 0,5 à 2 mm, de manière particulièrement préférée de 1 à 1,5 mm.

4. Pneu de véhicule selon l'une quelconque des revendications précédentes, **caractérisé en ce que** l'au moins un absorbeur de bruit (9) est au moins un élément amortisseur poreux.

5. Pneu de véhicule selon l'une quelconque des revendications 2 à 4, **caractérisé en ce que** l'absorbeur de bruit contient au moins un polyuréthane.

6. Pneu de véhicule selon la revendication 1, **caractérisé en ce que** l'épaisseur de couche de l'agent adhésif dans la direction radiale est au moins partiellement de 2 à 20 mm, de préférence de 3,5 à 20 mm, et aucun absorbeur de bruit supplémentaire n'est disposé dans ces zones ayant une épaisseur de couche de 2 à 20 mm, de préférence de 3,5 à 20 mm.

7. Pneu de véhicule selon l'une quelconque des revendications précédentes, **caractérisé en ce que** l'agent adhésif est exempt d'agents de vulcanisation, et de composés peroxydiques.

8. Pneu de véhicule selon l'une quelconque des revendications précédentes, **caractérisé en ce que** la charge ayant une masse volumique de 2,5 à 12 g/cm³ est choisie parmi les composés métalliques, notamment les oxydes métalliques, les carbonates métalliques et les sulfates métalliques, ainsi que les charges composites, qui sont formées à partir de composés métalliques, notamment d'oxydes métalliques, de carbonates métalliques et/ou de sulfates métalliques, qui comprennent un revêtement, notamment une enveloppe polymère.

9. Pneu de véhicule selon la revendication 8, **caractérisé en ce que** le composé métallique, notamment l'oxyde métallique, le carbonate métallique et/ou le sulfate métallique, de l'au moins une charge ayant une masse volumique de 2,5 à 12 g/cm³ est choisi dans le groupe constitué par l'oxyde de fer, le dioxyde de titane, l'oxyde de calcium, l'oxyde de magnésium, l'oxyde d'aluminium, l'oxyde de zinc, l'oxyde de baryum, le carbonate de calcium, le carbonate de magnésium et le sulfate de baryum.

10. Composition d'agent adhésif pour la fixation d'un absorbeur de bruit (9) sur une surface d'un pneu de véhicule, **caractérisée en ce que** la composition contient au moins les constituants suivants :
- 10 à 80 % en poids d'au moins un caoutchouc, et
- 11 à 80 % en poids d'au moins une polyoléfine, et
- 2 à 20 % en poids d'au moins une résine hydrocarbonée, et
- 1 à 30 % en poids d'au moins une charge ayant une masse volumique de 2,5 à 12 g/cm³.
